# EUROPEAN PATENT APPLICATION

(11) **EP 2 072 609 A1**
(43) Date of publication of application: **24.06.2009**
(21) Application number: 07742689.8
(22) Date of filing: 27.04.2007
(51) Int. Cl.: C10L 3/06, F02C 6/00, F02C 6/18, F02C 9/46, F25J 1/00

(54) **NATURAL GAS LIQUEFACTION PLANT, AND POWER SUPPLY SYSTEM, CONTROLLER AND OPERATING METHOD THEREOF**

(71) Applicant: Hitachi Ltd., Chiyoda-ku Tokyo 100-8280 (JP)
(72) Inventor: MYOREN, Chihiro, Chiyoda-ku, Tokyo 100-8220, (JP); HORITSUGI, Mutsumi,, Chiyoda-ku, Tokyo 100-8220, (JP); MARUSHIMA, Shinya,, Chiyoda-ku, Tokyo 100-8220, (JP)
(74) Representative: Beetz & Partner
(86) International application number: PCT/JP2007/059254
(87) International publication number: WO 2008/139535

(57) **Abstract**

This invention provides a natural gas liquefaction plant including: a liquefying apparatus 11 that liquefies a natural gas 111 by heat exchange with refrigerants 135, 145, 155; refrigerant compressors 13, 14, 15 that compress the refrigerants 134, 144, 154 supplied to the liquefying apparatus 11; motors 131, 141, 151 that drive the refrigerant compressors 13, 14, 15; normally active power generator equipment sets 21-25 and standby power generator equipment 25, both kinds of power generator equipment being adapted to generate electric power for driving the motors 131, 141, 151; and a control apparatus 40 which, if one of the normally active power generator equipment sets 21-24 (e.g., the power generator equipment set 24) comes to an operational stoppage, increases output levels of the normally active power generator equipment sets 21-23 other than the power generator equipment whose operation has stopped, and starts the standby power generator equipment 25. This configuration allows the plant to suppress decreases in a supply rate of electric power due to an operational stoppage of turbine power generator equipment.

## Description

### Technical Field

The present invention relates to a natural gas liquefaction plant and to an electric power supply system, control apparatus, and operating method for the plant.

### Background Art

As shown in Patent Document 1, natural gas liquefaction plants have generally employed a turbine-driven compressor scheme in which the rotative power of fossil-fueled turbines is transmitted to drive the refrigerant compressors directly coupled to the shafts of the turbines, as in gas turbines or steam turbines. When the turbine-driven compressor scheme is adopted, however, shutdown of the turbine equipment for maintenance or other purposes stops the refrigerant compressors that have been driven by the turbine equipment. In general, maintenance of turbine equipment requires a relatively long period of time (e.g., about 20 to 40 days on a yearly basis).

Meanwhile, natural gas liquefaction plants of a motor-driven compressor scheme in which the motors actuated by electric power are used to drive refrigerant compressors have come to be constructed (refer to Patent Document 1, for example). In general, the maintenance periods of motors are short, compared with those of turbine equipment. Adopting the motor-driven compressor scheme, therefore, provides an advantage in that compared with turbine equipment shutdown in the turbine-driven compressor scheme, shutdown of the refrigerant compressors, associated with motor shutdown for maintenance or other purposes, are reduced in period. This raises the availability of the entire plant and is also expected to reduce manufacturing costs for the LNG plant.

Patent Document 1: JP-A-2006-501432

### Disclosure of the Invention

### (Problems to be Solved by the Invention)

The natural gas liquefaction plants constructed in gas fields are commonly located at sites remote from cities and other industrial facilities, and thus the plants usually do not have large-scale electric power generating equipment nearby. Accordingly, if the motor-driven compressor scheme is adopted, electric power sufficient for driving refrigerant compressor driving motors and other equipment is generally difficult to procure from outside. Even if the power supplied from outside is used to drive the motors, laying power transmission lines from a remote power plant requires a great deal of labor and time, and substantial costs.

For these reasons, a plurality of turbine power-generating units are occasionally installed at the site of one natural gas liquefaction plant to implement on-site procurement of the electric power required for plant operation. In this case, the electric power supply system has turbine equipment, but since motors directly drive refrigerant compressors, even if one turbine power-generating unit is shut down for maintenance, there is no need to shut down the refrigerant compressors. In addition, if standby turbine power generator equipment is provided, decreases in the supply of the electric power can be avoided by operating the standby turbine power generator equipment instead of the turbine power generator equipment to be shut down.

When on-site procurement of electric power at the natural gas liquefaction plant of the motor-driven compressor scheme is possible, however, if the operation of either turbine power generator equipment comes to a sudden stoppage for any reasons such as trouble or disturbance, even when the standby turbine power generator equipment is immediately started, it takes time for the standby turbine equipment to reach its rating. If either turbine power generator equipment comes to an operational stoppage, therefore, the resulting temporary decrease in the supply of the electric power makes it difficult to maintain constant availability of the natural gas liquefaction plant.

The present invention has been made with the above taken into account, and an object of the invention is to provide: a natural gas liquefaction plant capable of suppressing a decrease in a supply quantity of electric power due to an operational stoppage of turbine power generator equipment; and an electric power supply system, control apparatus, and operating method for the plant.

### (Means for Solving the Problems)

In order to achieve the above object, the present invention is adapted so that in a natural gas liquefaction plant including a plurality of turbine power generator equipment sets and employing the motor-driven compressor scheme, if one of the turbine power generator equipment sets becomes unable to be driven, the invention augments output energy of any other normally active turbine power generator equipment until standby turbine power generator equipment has started operating. The invention also supplies previously stored electric power instead of increasing the output energy of the normally active turbine power generator equipment mentioned above.

### (Effects of the Invention)

The present invention makes it possible to suppress decreases in a supply quantity of electric power due to an operational stoppage of turbine power generator equipment.

### Brief Description of Drawings

Fig. 1 is a schematic of a natural gas liquefaction plant according to a first embodiment of the present invention;
Fig. 2 is a schematic of electric power generator equipment installed in the natural gas liquefaction plant according to the first embodiment of the present invention;
Fig. 3 shows a history of time-varying changes in electric power levels of each turbine power generator equipment set due to an operational stoppage of a normally active power generator equipment set installed in the natural gas liquefaction plant according to the first embodiment of the present invention;
Fig. 4 is a schematic of electric power generator equipment installed in a natural gas liquefaction plant according to a second embodiment of the present invention;
Fig. 5 is a schematic of electric power generator equipment installed in a natural gas liquefaction plant according to a third embodiment of the present invention;
Fig. 6 is a schematic of electric power generator equipment installed in a natural gas liquefaction plant according to a fourth embodiment of the present invention;
Fig. 7 is a schematic of electric power generator equipment installed in a natural gas liquefaction plant according to a fifth embodiment of the present invention;
Fig. 8 is a schematic of a natural gas liquefaction plant according to a sixth embodiment of the present invention;
Fig. 9 shows a history of time-varying changes in electric power levels of each turbine power generator equipment set due to an operational stoppage of a normally active power generator equipment set installed in the natural gas liquefaction plant according to the sixth embodiment of the present invention;
Fig. 10 is a schematic of a natural gas liquefaction plant according to a seventh embodiment of the present invention; and
Fig. 11 shows a history of time-varying changes in electric power levels of each turbine power generator equipment set due to an operational stoppage of a normally active power generator equipment set installed in the natural gas liquefaction plant according to the seventh embodiment of the present invention.

### (Reference Numerals)

- 1: Natural gas liquefaction plant
- 2: Electric power supply system
- 11: Liquefying apparatus
- 13-15: Refrigerant compressors
- 21-24: Normally active combined-cycle power generator equipment
- 25: Standby combined-cycle power generator equipment
- 30: Electric power storage equipment
- 31-35: Detectors
- 40: Control apparatus
- 41-45: Electric power levels
- 51-55: Command signals
- 59: Fuel control valve
- 60: Gas turbine engine
- 61: Air compressor
- 62: Combustor
- 63: Turbine
- 64: Power generator
- 66: Atomizer
- 67: Steam feeder
- 68: Intake charge cooler
- 69: Assist combustor
- 70: Steam turbine engine
- 71: Steam turbine
- 72: Condenser
- 73: Exhaust heat recovery boiler
- 81: Intake air
- 82: Compressed air
- 83: Fuel
- 84: Combustion gas
- 85, 86: Exhaust air
- 91: Steam
- 92: Exhaust air
- 93: Water
- 111: Refined natural gas
- 112: Liquefied natural gas
- 131: Motor
- 134, 135: Refrigerants
- 141: Motor
- 144, 145: Refrigerants
- 151: Motor
- 154, 155: Refrigerants

### Best Mode for Carrying out the Invention

Embodiments of the present invention will be described hereunder using the accompanying drawings.

### (First Embodiment)

### (1) Configuration

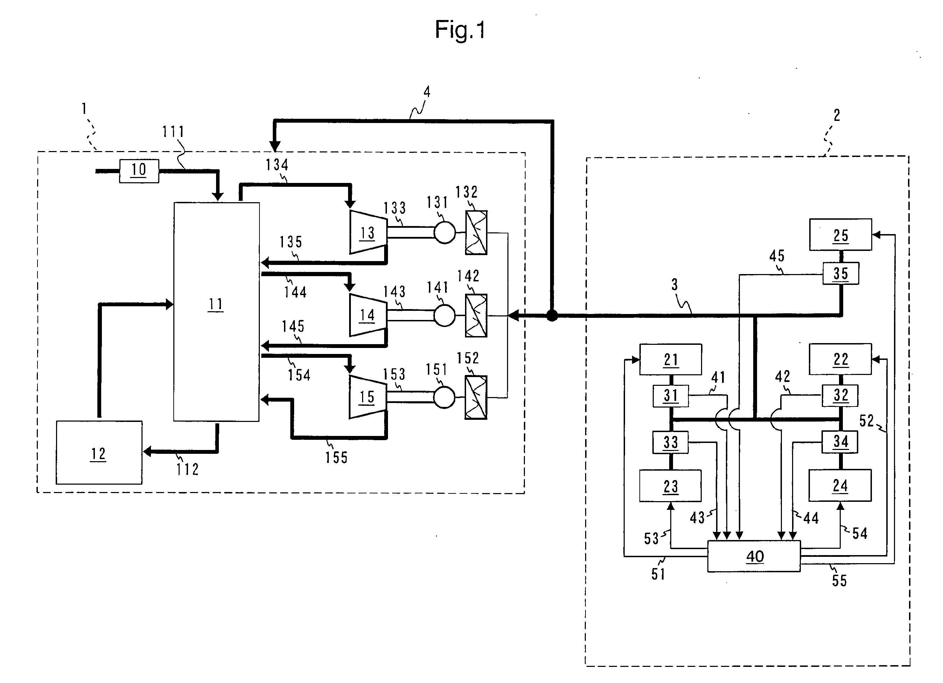

Fig. 1 is a schematic of a natural gas liquefaction plant according to a first embodiment of the present invention.
As shown in Fig. 1, the natural gas liquefaction plant according to the present embodiment includes: natural gas liquefaction equipment 1 that liquefies a natural gas that was mined for; an electric power supply system 2 that supplies electric power that has been generated by combusting a fossil fuel, to the natural gas liquefaction equipment 1; and a power transmission line 3 that transmits a generated-power output of the power supply system 2 to the natural gas liquefaction equipment 1.

### (1-1) Configuration of the natural gas liquefaction equipment 1

The natural gas liquefaction equipment 1 includes pretreatment equipment 10, a liquefying apparatus 11, a storage apparatus 12, refrigerant compressors 13, 14, 15, and motors 131, 141, 151.

The pretreatment equipment 10 removes slag, acid gases, moisture, mercury, and other liquefaction-inhibiting substances from a raw material which is the natural gas mined for in a gas field, and creates a refined natural gas 111. A natural gas that has been separated from oil components is supplied to the pretreatment equipment 10 when necessary.

The liquefying apparatus 11 cools the refined natural gas 111 by conducting heat exchanges between the refined natural gas 111 from the pretreatment equipment 10, and refrigerants 135, 145, 155, and thus creates a liquefied natural gas 112.

The storage apparatus 12 is, for example, a storage tank with a heat-insulating function, provided to store the liquefied natural gas 112 generated by the liquefying apparatus 11. The liquefied natural gas 112 stored within the storage apparatus 12 is shipped as a product. Boil-off gases that have occurred in the liquefying apparatus 11 and the storage apparatus 12 are supplied to, for example, the pretreatment apparatus 10 and the liquefying apparatus 11, and reused as a fuel.

The refrigerant compressors 13, 14, 15 have their rotating shafts coupled to output shafts of the motors 131, 141, 151 via shafts 133, 143, 153, respectively, and rotative power of the associated motors 131, 141, 151 is transmitted via the shafts 133, 143, 153, to rotationally drive the compressors. The refrigerants 135, 145, 155 that the refrigerant compressors 13, 14, 15 respectively supply to the liquefying apparatus 11 are compressed and generated in the compressors. The refrigerants 134, 144, 154 existing after the heat exchanges with the refined natural gas 111 in the liquefying apparatus 11, are returned to the refrigerant compressors 13, 14, 15, respectively, then compressed by the refrigerant compressors 13, 14, 15 once again, and supplied as new refrigerants 135, 145, 155 to the liquefying apparatus 11.

The configuration with three refrigerant compressors and three motors for driving the compressors is shown as an example in the present embodiment. However, necessary plant functionality is achievable with one pair of refrigerant compressors and compressor-driving motors, and the number of these plant constituent elements is adjusted appropriately according to particular factors such as cooling performance required of the liquefying apparatus 11. In addition, when a plurality of refrigerant compressors are installed, the kind of refrigerant compressed can be either different between the refrigerant compressors or the same therebetween.

Electric motors 131, 141, and 151 are driven by the electric power supplied from the power supply system 2. The power from the power supply system 2 is supplied to the natural gas liquefaction equipment 1 via the power transmission line 3, and after being voltage-adjusted in transformers 132, 142, 152, the power is further supplied to the electric motors 131, 141, 151.

In addition, if a rated power output level of the power supply system 2 is greater than an electrical energy demand level of the electric motors 131, 141, 151 and thus excess power is estimated to occur, the excess power is preferably consumed as internal equipment energy for the natural gas liquefaction equipment 1. In the configuration shown as an example in Fig. 1, a power transmission line 4 is branched from the power transmission line 3 so that the excess power can be supplied to the natural gas liquefaction equipment 1 via the power transmission line 4. Although this is not shown, using the excess power as energy for various equipment of the power supply system 2 may also be conceivable, or in some cases, the excess power may be transmitted and sold to facilities other than the natural gas liquefaction plant.

### (1-2) Configuration of the electric power supply system 2

The electric power supply system 2 includes normally active combined-cycle power generator equipment sets 21-24, a combined-cycle power generator equipment set 25 for use as a standby power supply, detectors 31-35 that each detect an operational status of the combined-cycle power generator equipment sets 21-25, and a control apparatus 40 that uses detection signals of the detectors 31-35 to control the combined-cycle power generator equipment sets 21-25. If the control apparatus 40 detects an operational stoppage of either of the normally active combined-cycle power generator equipment sets 21-24 based on power levels 41-44 output from the detectors 31-34 (hereinafter, the normally active power generator equipment set whose operation has stopped is referred to simply as the "deactivated generator equipment"), the control apparatus increases output energy of the normally active combined-cycle power generator equipment, except for the deactivated generator equipment, and starts the standby combined-cycle power generator equipment 25. These functions of the control apparatus 40 are detailed later herein.

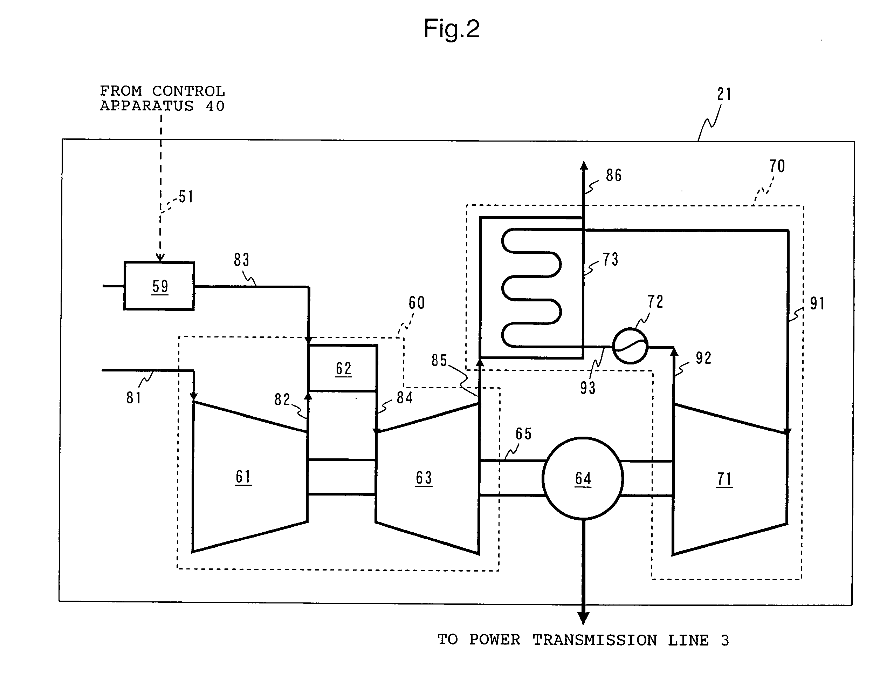

Fig. 2 is a schematic diagram of the combined-cycle power generator equipment 21.
Although a configuration of the combined-cycle power generator equipment 21 is described as a typical example below, this configuration also holds true for the combined-cycle power generator equipment sets 22-25. Hereinafter, the combined-cycle power generator equipment sets 21-25 are referred to simply as the power generator equipment sets 21-25 where necessary.

As shown in Fig. 2, the power generator equipment 21 includes a power generator 64 that generates electric power for driving the motors 131, 141, 151 which drive the refrigerant compressors of the natural gas liquefaction plant 1, a gas turbine engine 60 and steam turbine engine 70 for driving the power generator 64, and an output-increasing element for increasing output energy of the power generator 64. The power generator 64 is coupled to a turbine 63 and a steam turbine 71 via a shaft 65.

The gas turbine engine 60 has an air compressor 61 that compresses intake air 81, a combustor 62 that combusts a fuel 83 together with the compressed air 82 supplied from the air compressor 61, and the turbine 63 that obtains rotative power using a combustion gas 84 supplied from the combustor 62.

The steam turbine engine 70 has an exhaust heat recovery boiler 73 that generates a steam 91 with exhaust air 85 of the turbine 63 as a heat source, the steam turbine 71 that obtains rotative power from the steam 91 generated by the exhaust heat recovery boiler 73, and a condenser 72 that condenses exhaust steam 92 supplied from the steam turbine 71. Water 93 that the condenser 72 has generated is once again supplied to the exhaust heat recovery boiler 73 and heated by the exhaust air 85 of the turbine 63. Exhaust air 86 generated by the heating of the water 93 is purified as necessary, and then released to the atmosphere.

While an example in which the power generator equipment 21 includes one gas turbine engine 60 and one steam turbine engine 70 is shown in the present embodiment, at least one of the two turbine engines, that is, 60 or 70 may be provided in a plurality of places. In addition, while the gas turbine engine 60 of a single-shaft type is shown by way of example, this turbine engine may be replaced by a twin-shaft type of gas turbine engine that utilizes combustion gases from a combustor to drive a high-pressure turbine and a low-pressure turbine both rotatable at mutually different speeds. Furthermore, while the steam turbine engine 70 with a single steam turbine 71 is shown as an example, this turbine engine may be replaced by a steam turbine engine having a plurality of steam turbines. Moreover, while the turbine 63 and the steam turbine 71 are coaxially coupled to the power generator 64, the turbine 63 and the steam turbine 71 may each be constructed to use a different driving axis and drive an independent power generator.

The present embodiment also includes a fuel control valve 59 that functions as a fuel controller to control a flow rate of the fuel 83 supplied to the combustor 62. The fuel control valve 59 constitutes the foregoing output-increasing element that increases the power output level of the power generator 64. In addition to angle control of the flow control valve, a method available to control the flow rate of the fuel 83 would be by assigning a command to a fuel pump which delivers the fuel, and controlling a delivery flow rate of the fuel pump.

Referring back to Fig. 1, the foregoing detectors 31-35 are installed to detect operational states of the respective power generator equipment sets 21-25, and can be used as, for example, rotational speed detectors that detect rotational speeds of the air compressor 61, the turbine 63, the steam turbine 71, the power generator 64, and the like. An example in which electric power measuring instruments for detecting the output power levels (power supply rates) of the power generator equipment sets 21-25 are used as the detectors 31-35 is described in the present embodiment.

The detectors 31-35 are each provided halfway on the power transmission line 3, near the associated power generator equipment set 21-25. In order to allow the output power level of the associated power generator equipment set 21-25 to be independently detected, each detector 31-35 is installed at an upstream side relative to a point at which the power transmission line 3 meets a power transmission line routed from any other power generator equipment. Detection signals 41-45, or the power levels that have been measured by the detectors 31-35, are input to the control apparatus 40.

In accordance with the power levels 41-45 output from the detectors 31-35, the control apparatus 40 monitors individual supply power levels of the power generator equipment sets 21-25 and a total supply power level of the power supply system 2. On the basis of the total supply power level of the power supply system 2, the control apparatus 40 computes command data to the power generator equipment sets 21-25 so as to minimize any differences from rated output P0, and outputs command signals to the power generator equipment sets 21-25.

At this time, the control apparatus 40 usually controls the normally active power generator equipment sets 21-24 to obtain the rated outputs P0 thereof. However, if, on the basis of the output power values 41-44 from the detectors 31-34, the control apparatus 40 detects the operational stoppage of either of the normally active power generator equipment sets 21-24, the control apparatus starts the standby power generator equipment 25 and at the same time, until the rated output P0 of the started power generator equipment 25 has been reached, controls the output levels of the normally active generator equipment sets so that these output levels will increase to compensate for a generated-power shortage equivalent to a difference from the rated output P0 of the deactivated generator equipment. The control apparatus 40 conducts the control in the above latter case while monitoring the output power values 41-45 from the detectors 31-35.

More specifically, when the control apparatus 40 increases the output levels of the normally active generator equipment sets, the control apparatus outputs command signals 51-54 to the fuel control valves 59, respectively, of the normally active generator equipment sets and controls an opening angle of the fuel control valves 59 to increase the flow rate of the fuel 83 supplied to the combustor 62. This immediately compensates for the shortage of the generated-power output level due to the operational stop of the specific power generator equipment. In addition to increasing the outputs of the normally active generator equipment sets, the control apparatus 40 outputs a command signal 55 to the fuel control valve 59 of the standby power generator equipment 25 and supplies the fuel 83 to the combustor 62 to start the standby power generator equipment 25. After this, as a generated-power output level of the standby power generator equipment 25 increases, the control apparatus reduces the outputs of the normally active generator equipment sets (reduces the flow rate of the fuel 83) and when rated output P0 of the standby power generator equipment 25 is reached, returns the normally active generator equipment sets to the rated outputs P0 thereof.

### (2) Operational description

Next, operation of the natural gas liquefaction plant having the above configuration will be described.

### (2-1) Operation of the natural gas liquefaction equipment 1

First, the refrigerant compressors 13, 14, 15 are rotationally driven by the rotative power of the motors 131, 141, 151 that is transmitted via the shafts 133, 143, 153, respectively, and the compressors 13, 14, 15 compress the refrigerants 134, 144, 154.

In the meantime, the natural gas that was mined for in a gas field in order to become a raw material is separated from oil components when necessary, and then supplied to the pretreatment equipment 10, in which, slag, acid gases, moisture, mercury, and other substances that hinder liquefaction are then removed from the natural gas. The refined natural gas 111 that has thus been created is heat-exchanged with the refrigerants 135, 145, 155 from the refrigerant compressors 13, 14, 15 by the liquefying apparatus 11, thereby to be cooled and liquefied. The liquefied natural gas 112 that has been created in the liquefying apparatus 11 is stored into the storage apparatus 12 and then shipped as a fuel product.

The refrigerants 134, 144, 154 existing after being heat-exchanged with the refined natural gas 111 by the liquefying apparatus 11 are returned to the refrigerant compressors 13, 14, 15, respectively, and the boil-off gases that have occurred in the liquefying apparatus 11 and the storage apparatus 12 are supplied to, for example, the pretreatment equipment 10 and the liquefying apparatus 11, for reuse as a fuel.

### (2-2) Operation of the electric power supply system 2

### (2-2.1) Operation under normal conditions

First, intake air 81 that is an operating fluid is compressed by the air compressor 61 in the gas turbine engine 60, and the compressed air 82 is supplied to the combustor 62. In the combustor 62, the fuel 83 is combusted together with the compressed air 82, to generate a high-temperature combustion gas 84, by which the turbine 63 is then driven.

Meanwhile, the steam turbine 71 in the steam turbine engine 70 is driven by steam 91 that is another operating fluid, and exhaust steam 92 from the steam turbine 71 is condensed by the condenser 72. Water 93 that has resulted from the condensation by the condenser 72 is supplied to the exhaust heat recovery boiler 73 and heat-exchanged with the exhaust air 85 released from the gas turbine engine 60. This causes the generated steam 91 to flow into the steam turbine 71 once again.

The gas turbine engine 60 and steam turbine engine 70 that have thus gained rotative power drives the power generators 64 to obtain electrical energy from the rotative power. Under normal conditions, electric power that has been generated by each power generator 64 is sent from the normally active power generator equipment sets 21-24 to the power transmission line 3, and then supplied to the natural gas liquefaction equipment 1 via the power transmission line 3. The electric power, after being supplied to the natural gas liquefaction equipment 1, is voltage-controlled by the transformers 132, 142, 152, and then supplied to each of the motors 131, 141, 151. This drives the motors 131, 141, 151, hence driving the refrigerant compressors 13, 14, 15.

An example of more specific operating conditions assumed of the power generator equipment sets 21-24 in the present embodiment is described below. First, intake air 81, an operating fluid, flows into the air compressor 61 at a pressure of about 0.1 MPa and a temperature of about 20°C. The air that has flown into the air compressor 61 is compressed to a required pressure ratio (say, 15) and further flows into the combustor 62 as compressed air 82 of about 2.0 MPa in pressure and about 400°C in temperature. The compressed air 82, after being combusted in the combustor 62, then flowing into the turbine 63 as the combustion gas 84 of about 1,400°C, and conducting work in the turbine 63, is supplied to the exhaust heat recovery boiler 73 as exhaust air 85 of about 600°C. In this case, if a triple-pressure reheating boiler is used as the exhaust heat recovery boiler 73, heat efficiency of the entire combined cycle is expected to reach at least 50% LHV. The same also applies to the standby power generator equipment 25.

### (2-2.2) In the event of a power generator operational stoppage

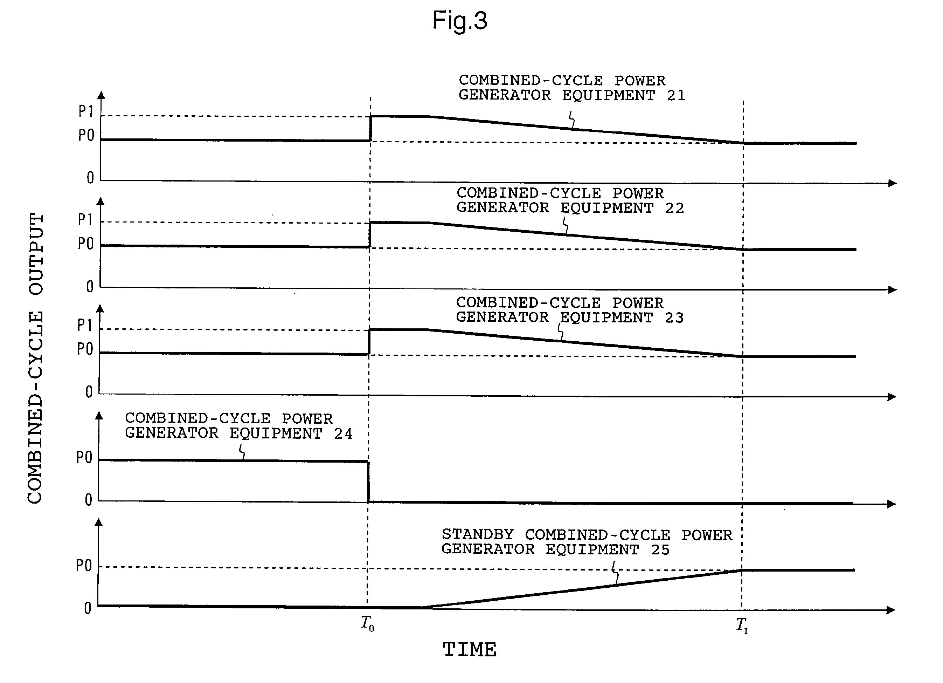

Fig. 3 shows a history of time-varying changes in the electric power levels of each turbine power generator equipment set due to an operational stoppage of either of the normally active power generator equipment sets.

In Fig. 3, if the operation of the normally active power generator equipment 24, for example, stops at time T0 for whatever reason such as trouble or disturbance, the power level 44 of the turbine power equipment 24 decreases from the rated output P0 (in the example of Fig. 3, decreases to zero). The control apparatus 40, after detecting the decrease in the power level 44, outputs a starting signal as command signal 55 to the standby power generator equipment 25, thus starting the standby power generator equipment 25.

Simultaneously with (or immediately before or after) the start of the standby power generator equipment 25, the control apparatus 40 also increases the output levels of the normally active generator equipment sets 21-23 to minimize changes in the power supply rate of the entire power supply system 2 inclusive of the standby power generator equipment 25. In this case, the control apparatus 40 computes from the power levels 41-45 a difference between the rated output P0 and current power output level of the entire power supply system 2, then computes output level increase requirements of the normally active generator equipment sets 21-23 from the output that has been increased for compensating for the above difference, and outputs command signals 51-53 (output increase signals) to the normally active generator equipment sets 21-23, based on computation results. This temporarily increases the generated-power output level of each of the normally active generator equipment sets 21-23 from the rated output P0 to a higher output level P1 (>P0), thus rapidly compensates for the shortage of the generated-power output level due to the operational stoppage of the power generator equipment 24.

After that, the control apparatus 40 monitors the power level 45 of the power generator equipment 25, outputs command signals 51-53 (output reduction signals) to the normally active power generating sets 21-23 during a time period from the start of power generation to an arrival at the rated output P0, and reduces the generated-power outputs of the normally active power generating sets 21-23 according to the particular increase in the power level 45. Almost at a time of the arrival of the power level 45 of the power generator equipment 25 at the rated output P0, the control apparatus controls the normally active power generating sets 21-23 to return the power levels 41-43 to the respective output ratings P0.

### (3) Effects of the present embodiment of the invention

In the present embodiment, as set forth above, even if the power generator equipment 24, for example, comes to an operational stoppage, decreases in power supply rate can be suppressed by operating the standby power generator equipment 25. At this time, during the time period from the operational start of the standby power generator equipment 25 to the arrival thereof at the rated output P0, changes in the power supply rate of the entire power supply system 2 can be suppressed by temporarily increasing the output levels of the normally active generating sets 21-23.

In this way, according to the present embodiment, decreases in power supply rate can be suppressed, even if the power generator equipment sets 21-24 become unable to be driven for whatever reasons such as trouble or disturbance. Changes in availability of the natural gas liquefaction plant can therefore be suppressed and the liquefied natural gas produced efficiently.

Additionally, as described above, during supply of electric power by the normally active power generator equipment sets 21-24, the power is supplied to the motors 131, 141, 151 via the power transmission line 3 and the transformers 132, 142, 152, respectively, and thus drives the refrigerant compressors 13, 14, 15. The adoption of the motor-driven refrigerant compressors 13, 14, 15, therefore, is associated with power losses in the power transmission line 3, the transformers 132, 142, 152, and the motors 131, 141, 151. However, even a total power loss ratio in this case is estimated at as small as about 10%, for example. Since a total combined-cycle heat efficiency of at least 50% LHV is anticipated as discussed above, heat efficiency can be improved significantly, compared with that obtainable if the refrigerant compressors 13, 14, 15 are of the turbine-driven type and are each driven by a gas turbine engine whose heat efficiency is of a general level (say, about 35% LHV).

In addition, adopting the turbine-driven scheme to drive the refrigerant compressors 13, 14, 15 allows the availability of these compressors to be improved over that achievable by adopting the motor-driven scheme. This improvement stems from the fact that since motors are generally shorter than gas turbine engines in maintenance period, using the motors as drives for driving directly the refrigerant compressors 13, 14, 15 allows shutdown periods thereof to be reduced in comparison with using the turbine-driven scheme.

Furthermore, in the present embodiment, since the natural gas liquefaction plant is installed at an electric power procurement site, although the natural gas liquefaction equipment 1 does not use a fossil-fueled turbine engine because of the motor-driven scheme, the power supply system 2 has the gas turbine engine 60 and the steam turbine engine 70. The two turbine engines, however, are for generating power and not for obtaining the rotative power transmitted to the refrigerant compressors 13, 14, 15. That is to say, since the gas turbine engine 60 and the steam turbine engine 70 are not directly coupled to the refrigerant compressors 13, 14, 15, there is no need to stop the refrigerant compressors 13, 14, 15, for maintenance. This advantage also arises from the adoption of the motor-driven scheme.

Besides, in the present embodiment, the motor-driven scheme is employed and the combined-cycle power generator equipment sets 21-25 are used as the equipment for generating the electric power supplied to the refrigerant compressor driving motors 131, 141, 151. In the motor-driven scheme, using a highly heat-efficient combined cycle in this way to obtain the electric power required for motor driving makes the efficiency of the entire plant improvable, which in turn leads to reduced running costs.

### (Second Embodiment)

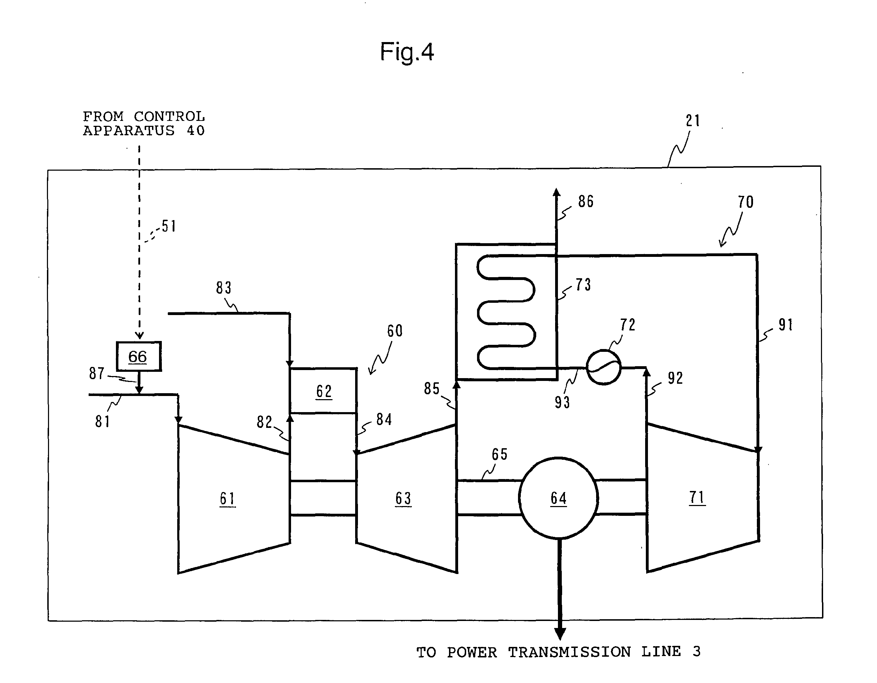

Fig. 4 is a schematic of electric power generator equipments installed in a natural gas liquefaction plant according to a second embodiment of the present invention.
The natural gas liquefaction plant according to the present embodiment has substantially the same configuration as that of the first embodiment, except that power generator equipment differs in output-strengthening method. Similarly to the first embodiment, therefore, a configuration of power generator equipment 21 which is one of multiple power generator equipment sets will be described below, this configuration is also applied to power generator equipment sets 22-25.

In the power generator equipment 21 of Fig. 4, an atomizer 66 that supplies a coolant (water or the like) 87 in atomized form is installed at an entrance of the air compressor 61. Supplying the coolant 87 in atomized form to the intake air 81 to the air compressor 61 offers an intake air cooling effect and an intermediate cooling effect at the air compressor 61, thus increasing a suction flow rate of the intake air 81 to the air compressor 61, and reducing compression motive power. This allows the output level of the power generator equipment 21 to be increased.

In the present embodiment, the control apparatus 40 uses command signals 51 to control an atomized-coolant supply rate of the atomizer 66. If either of the normally active power generator equipment sets 21-24 (e.g., the power generator equipment 24) comes to an operational stoppage, the control apparatus 40 starts the standby power generator equipment 25 and at the same time, outputs a flow-increasing signal as one command signal 51 to the respective atomizers 66 of the normally active power generator equipment sets (e.g., power generator equipment sets 21-23). An increase in the supply rate of the atomized coolant 87 with respect to the intake air 81 to the air compressor 61 increases the output levels of the normally active power generator equipment sets 21-23.

After that, as the output of the standby power generator equipment 25 increases, the control apparatus 40 outputs a flow-reducing signal as another command signal 51 to the atomizers 66 of the normally active power generator equipment sets 21-23, and at around the time when the rated output of the standby power generator equipment 25 is reached, returns the normally active power generator equipment sets 21-23 to the rated output P0.

Substantially the same advantageous effects as in the first embodiment are also obtainable in the present second embodiment.

### (Third Embodiment)

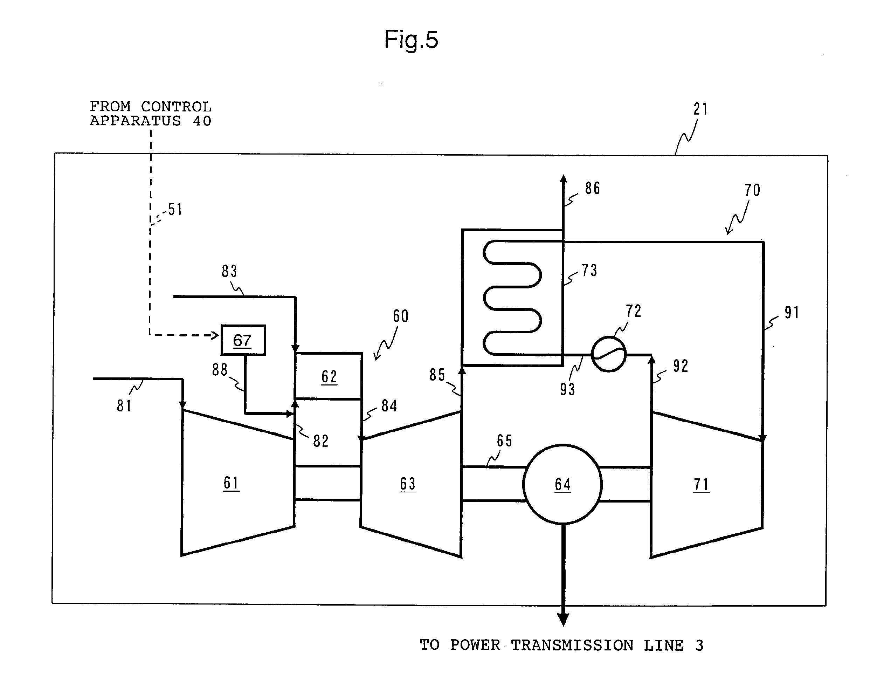

Fig. 5 is a schematic of electric power generator equipment installed in a natural gas liquefaction plant according to a third embodiment of the present invention. The natural gas liquefaction plant according to the present embodiment also has substantially the same configuration as that of the first embodiment, except that power generator equipment differs in output-strengthening method. Similarly to the first embodiment, therefore, a configuration of power generator equipment 21 which is one of multiple power generator equipment sets will be described below, this configuration is also applied to power generator equipment sets 22-25.

In the power generator equipment 21 of Fig. 5, a steam feeder 67 that supplies a steam 88 to compressed air 82 is installed at a certain position in a section ranging from an exit of the air compressor 61 to an entrance of the combustor 62. Supplying the coolant 87 in atomized form to the compressed air 82 supplied to the combustor 62 makes it possible to increase a total amount of energy fed into the turbine 63, and hence to increase the output level of the power generator equipment 21.

In the present embodiment, the control apparatus 40 uses command signals 51 to control a flow rate of the steam supplied from the steam feeder 67. If either of the normally active power generator equipment sets 21-24 (e.g., the power generator equipment 24) comes to an operational stoppage, the control apparatus 40 starts the standby power generator equipment 25 and at the same time, outputs a flow-increasing signal as one command signal 51 to the respective steam feeders 67 of the normally active power generator equipment sets (e.g., power generator equipment sets 21-23). An increase in the flow rate of the steam 88 in the compressed air 82 to the combustor 62 increases the output levels of the normally active power generator equipment sets 21-23.

After that, as the output of the standby power generator equipment 25 increases, the control apparatus 40 outputs a flow-reducing signal as another command signal 51 to the steam feeders 67 of the normally active power generator equipment sets 21-23, and at around the time when the rated output of the standby power generator equipment 25 is reached, returns the normally active power generator equipment sets 21-23 to the rated output P0.

Substantially the same advantageous effects as in the first embodiment are also obtainable in the present third embodiment.

It is conceivable that the steam feeder 67 will be provided not only between the exit of the air compressor 61 and the entrance of the combustor 62, but also between the exit of the air compressor 61 and an entrance of the turbine 63.

### (Fourth Embodiment)

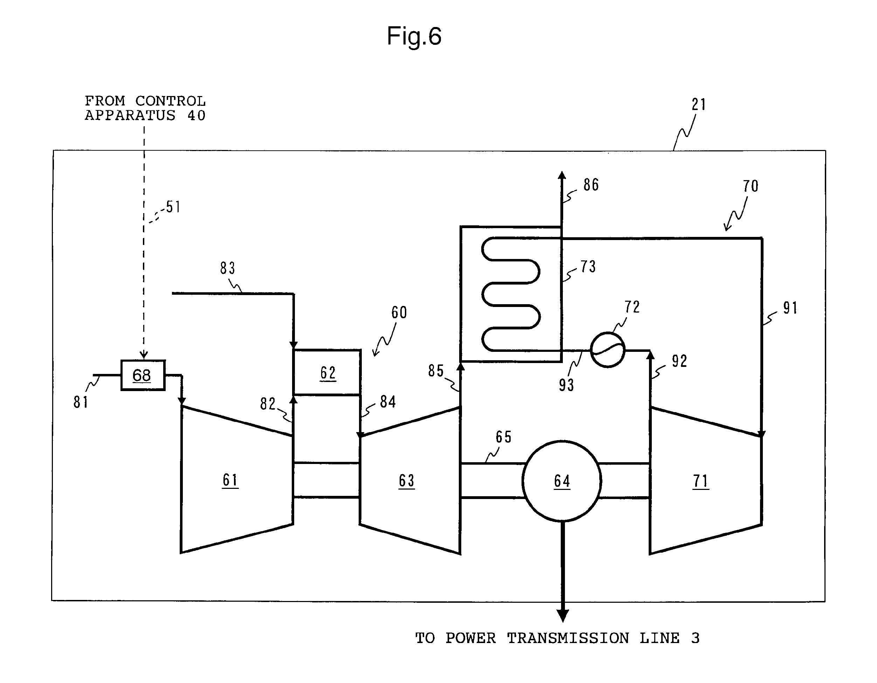

Fig. 6 is a schematic of electric power generator equipment installed in a natural gas liquefaction plant according to a fourth embodiment of the present invention.
The natural gas liquefaction plant according to the present embodiment has substantially the same configuration as that of the first embodiment, except that power generator equipment differs in output-strengthening method. Similarly to the first embodiment, therefore, a configuration of power generator equipment 21 which is one of multiple power generator equipment sets will be described below, this configuration is also applied to power generator equipment sets 22-25.

The power generator equipment 21 shown in Fig. 6 includes an intake charge cooler 68 that controls an entrance temperature of the air compressor 61. The kind of intake charge cooler 68 is not limited, only if the cooler performs a cooling function for intake air 81. It is conceivable, however, that an ice storage apparatus, for example, will be used to cool the intake air 81 or that a heat exchanger for exchanging heat with some refrigerant (such as a refrigerant used in the natural gas liquefaction plant 1) or a heat exchanger for a heat exchange with the low-temperature exhaust heat generated in the natural gas liquefaction plant 1 will be used to cool the intake air 81. In addition, the method adopted in the second embodiment of Fig. 4 yields an intake charge cooling effect. The intake charge cooling effect at the air compressor 61 can be obtained by providing the intake charge cooler 68, so a flow rate of the intake air 81 to the air compressor 61 increases, which allows the output level of the power generator equipment 21 to be increased.

In the present embodiment, the control apparatus 40 uses command signals 51 to control the intake charge cooler 68. If either of the normally active power generator equipment sets 21-24 (e.g., the power generator equipment 24) comes to an operational stoppage, the control apparatus 40 starts the standby power generator equipment 25 and at the same time, outputs an intake air temperature-reducing signal as one command signal 51 to the respective intake charge coolers 68 of the normally active power generator equipment sets (e.g., power generator equipment sets 21-23). Reducing the temperature of the intake air 81 at the air compressor 61 increases the output levels of the normally active power generator equipment sets 21-23.

After that, as the output of the standby power generator equipment 25 increases, the control apparatus 40 outputs an intake air temperature-increasing signal as another command signal 51 to the intake charge coolers 68 of the normally active power generator equipment sets 21-23, and at around the time when the rated output of the standby power generator equipment 25 is reached, returns the normally active power generator equipment sets 21-23 to the rated output P0.

Substantially the same advantageous effects as in the first embodiment are also obtainable in the present fourth embodiment.

### (Fifth Embodiment)

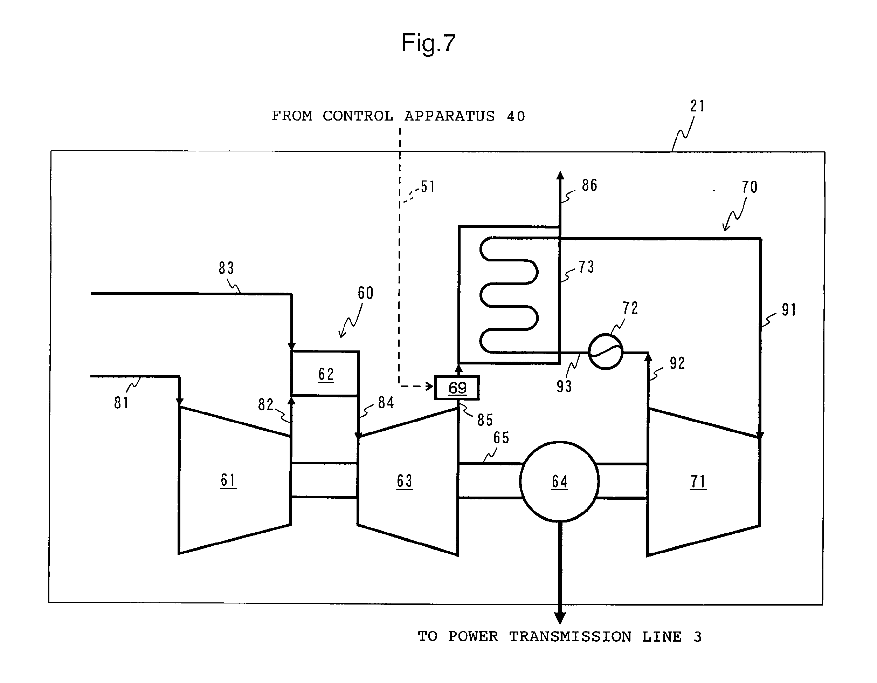

Fig. 7 is a schematic of electric power generator equipment installed in a natural gas liquefaction plant according to a fifth embodiment of the present invention.
The natural gas liquefaction plant according to the present embodiment has substantially the same configuration as that of the first embodiment, except that power generator equipment differs in output-strengthening method. Similarly to the first embodiment, therefore, a configuration of power generator equipment 21 which is one of multiple power generator equipment sets will be described below, this configuration is also applied to power generator equipment sets 22-25.

In the power generator equipment 21 of Fig. 7, an assist combustor 69 is installed in a region from the turbine 63 to the exhaust heat recovery boiler 73. The assist combustor 69 performs a function to heat the exhaust air 85 of the turbine 63 by combustion heat and enhance a heat source temperature of the exhaust heat recovery boiler 73. Gases that have occurred during the liquefying process of the natural gas liquefaction equipment 1 (e.g., the boil-off gases generated in the liquefying apparatus 11 or the storage apparatus 12) are assumed as a fuel combusted in the assist combustor 69, but in some cases, the refined natural gas 111 or the liquefied natural gas 112 can also be used instead. Alternatively, the fuel may be supplied from outside. Since the assist combustor 69 assists in combustion of the exhaust air 85 to increase a temperature thereof, the amount of steam generated in the exhaust heat recovery boiler 73 can be increased, which increases the suction flow rate of the intake air 81 in the air compressor 61, hence increasing the output of the power generator equipment 21.

In the present embodiment, the control apparatus 40 uses command signals 51 to conduct fuel supply rate control of the assist combustor 69 and fuel supply on/off control. If either of the normally active power generator equipment sets 21-24 (e.g., the power generator equipment 24) comes to an operational stoppage, the control apparatus 40 starts the standby power generator equipment 25 and at the same time, outputs a fuel-increasing signal or fuel supply starting signal as one command signal 51 to the respective assist combustors 69 of the normally active power generator equipment sets (e.g., power generator equipment sets 21-23). Increasing the temperature of the exhaust air 85 in each turbine 63 increases the output levels of the normally active power generator equipment sets 21-23.

After that, as the output of the standby power generator equipment 25 increases, the control apparatus 40 outputs a combustion-reducing signal or fuel supply stopping signal as another command signal 51 to the assist combustors 69 of the normally active power generator equipment sets 21-23, and at around the time when the rated output of the standby power generator equipment 25 is reached, returns the normally active power generator equipment sets 21-23 to the rated output P0.

Substantially the same advantageous effects as in the first embodiment are also obtainable in the present fifth embodiment. In addition, when the boil-off gases generated in the natural gas liquefying process are used as the fuel in the assist combustor 69, total plant efficiency can be improved in comparison with procuring the fuel from outside.

In the present embodiment, since combined-cycle power generator equipment is used to generate the electric power to be supplied to the natural gas liquefaction equipment 1, the source of steam generation in the steam turbine engine 70 functions as the exhaust heat recovery boiler 73 that uses the exhaust heat of the turbine 63 as a heat source. However, if mere steam turbine power generator equipment, not the combined-cycle type, were used, the steam-generating source could be a fuel-fired boiler. In this case, since the amount of heat from the boiler would depend upon a flow rate of the fuel supplied thereto, a mechanism for adjusting the amount of fuel supplied to the boiler might be provided to adjust the amount of steam generated, and the adjusting mechanism might be controlled by the control apparatus 40.

### (Sixth Embodiment)

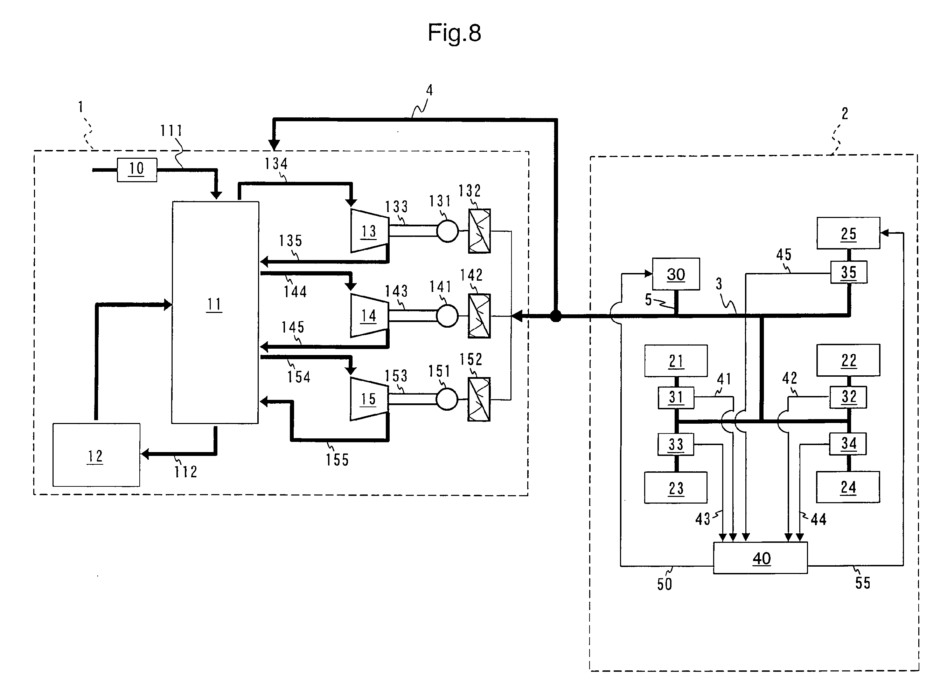

Fig. 8 is a schematic of a natural gas liquefaction plant according to a sixth embodiment of the present invention.
In the first to fifth embodiments, the plant is adapted so that if an operational stoppage of either power generator equipment occurs, the normally active power generator equipment sets are temporarily increased in output level as a suppression measure against any decreases in output that will or may occur by the time the rated output of the standby power generator equipment 25 is reached. In the present embodiment, however, part of the excess electric power stored under normal operating conditions will be added to normal supply power, instead of the normally active power generator equipment sets being temporarily increased in output level as a suppression measure against any decreases in output that will or may occur by the time the rated output of the standby power generator equipment 25 is reached.

That is to say, the power supply system 2 in the natural gas liquefaction plant of Fig. 8 includes electric power storage equipment 30. A power transmission line 5 is branched from the power transmission line 3 interconnecting the power supply system 2 and the natural gas liquefaction equipment 1, and part of the excess power within the power supply system 2 under normal operating conditions is supplied to the power storage equipment 30 via the power transmission line 5 and stored into the equipment 30. In the present embodiment, the values 41-45 of the electric power which has been generated in the power generator equipment sets 21-25 are input to the control apparatus 40, but command signals for output control are not transmitted to the normally active power generator equipment sets 21-24. Instead, these command signals are transmitted only to the standby power generator equipment 25. In addition, the control apparatus 40 outputs a command signal 50 to the power storage equipment 30 and controls the amount of power supplied therefrom. Other configurational aspects are substantially the same as those of each embodiment described above.

In the present embodiment, a flywheel type is assumed as the electric power storage equipment 30. The flywheel type uses supplied excess electric power to rotate a flywheel in advance and converts rotational energy thereof into electricity. In other words, the flywheel type conserves excess power as rotational energy, and when necessary, reconverts the rotational energy into electric energy. The rotational energy of the flywheel is conserved by inertial force. More specifically, the flywheel type usually includes a flywheel, a rotor that rotates the flywheel, an electric motor that rotates the rotor, and a power generator that converts rotational energy into electricity. In general, the flywheel type employs a configuration that suppresses frictional loss of a shaft section and air resistance of the flywheel to suppress rotational energy loss. For example, the rotor is levitated by using superconduction and magnetism to suppress frictional loss, or surroundings of the flywheel are made vacuum to prevent loss due to the air resistance of the flywheel.

The kind of power storage equipment 30, however, is not limited to the flywheel type, and the equipment 30 may be substituted by any other apparatus having an electricity storage function. More specifically, other examples effectively usable as alternatives for the power storage equipment include a sodium-sulfur battery (NaS battery) or the like. This NaS battery is for storing electric power by utilizing a chemical reaction between sodium (Na) and sulfur (S), and includes elements such as a battery unit and a control panel that controls charge/discharge of the battery unit. The NaS battery, compared with lead batteries and the like, can store a great deal of electric power at high efficiency and has another advantage in that a solid electrolyte makes the battery free from self-discharge. A capacitor can be used as a further alternative.

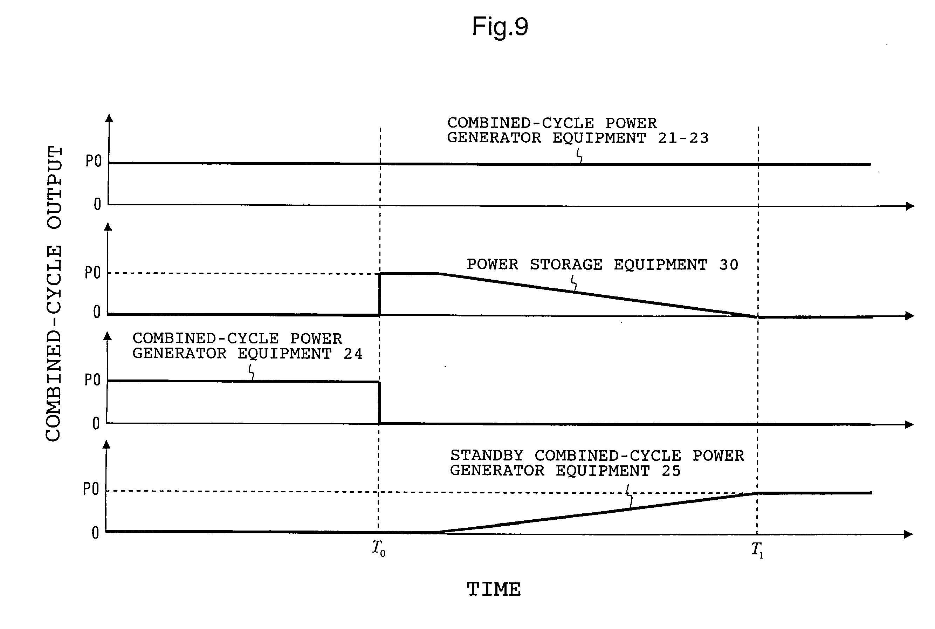

Fig. 9 shows a history of time-varying changes in electric power levels of each turbine power generator equipment due to an operational stoppage of a normally active power generator equipment set according to the sixth embodiment of the present invention.
As shown in Fig. 9, if the operation of the power generator equipment 24 stops at time T0 for whatever reason such as trouble or disturbance, the power level 44 of the deactivated power generator equipment 24 decreases from the rated output level P0 to 0. The control apparatus 40, after detecting the decrease in the power level 44, starts the standby power generator equipment 25. In this timing, the control apparatus 40 outputs a power supply rate-increasing signal as a command signal 50 to the power storage equipment 30 to minimize changes in the supply of power from the entire power supply system 2. Thus, power equivalent to the rated output P0 of the deactivated generator equipment 24 is supplied from the power storage equipment 30.

After that, as power generation by the standby power generator equipment 25 begins and the power level 45 increases, the control apparatus 40 outputs a power supply rate-reducing signal as another command signal 50 to the power storage equipment 30 so as to minimize changes in the generated-power output level of the entire power supply system 2. The supply of power from the power supply system 30 is thus reduced. At around the time when the rated output P0 of the power generator equipment 25 is reached, the supply of power from the power storage equipment 30 becomes zero.

In the present embodiment, substantially the same advantageous effects as achievable in each foregoing embodiment can also be obtained since changes in the supply of power from the power supply system 2 during the time period from the operational start of the standby power generator equipment 25 to the arrival thereof at the rated output can be suppressed. In addition, the output levels of the power generator equipment sets 21-23 continuously operated from the normally active status are maintained at the respective output ratings P0, which allows continued operation with high reliability of the components of the power generator equipment sets 21-23.

### (Seventh Embodiment)

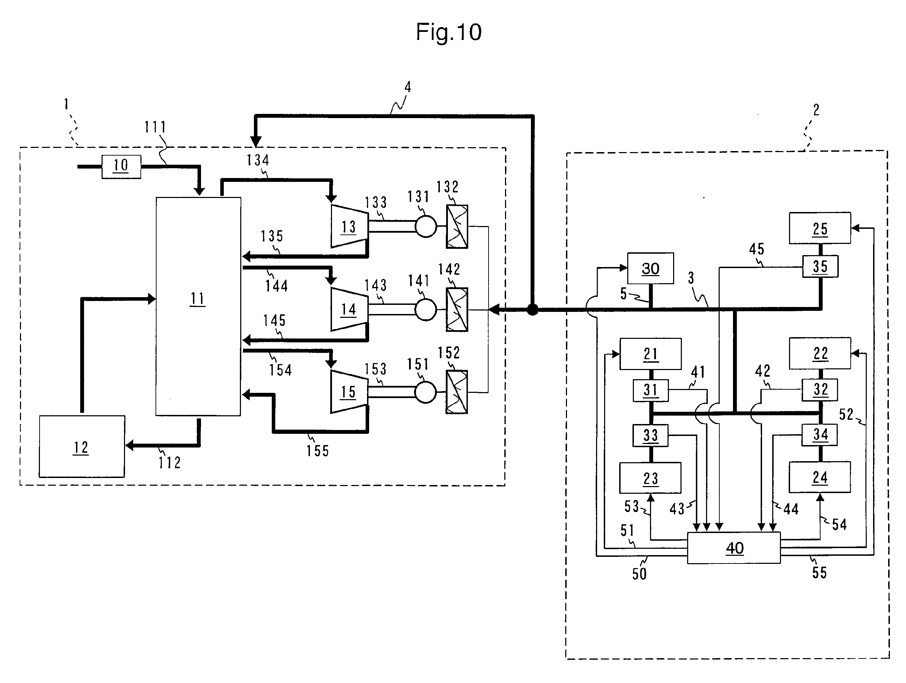

Fig. 10 is a schematic of a natural gas liquefaction plant according to a seventh embodiment of the present invention.
The present embodiment is a combination of either of the first to fifth embodiments and the sixth embodiment. That is to say, the present embodiment is adapted so that as a suppression measure against decreases in output during a time period from a power generator operational stoppage to an arrival of the standby power generator equipment 25 at the rated output thereof, the embodiment supplies electric power from the power storage equipment 30 in addition to increasing the output levels of the normally active generator equipment sets. During the time period to the arrival of the standby power generator equipment 25 at the rated output, the control apparatus 40 controls the generated-power output levels of the normally active generator equipment sets and the supply of power from the power storage equipment 30. Changes in the supply of power from the entire power supply system 2 are thus suppressed.

A route of the signals which the control apparatus 40 exchanges with other components is described next. First, generated-power quantities 41-45 by the power generator equipment sets 21-25 are input to the control apparatus 40, and electrical energy that the entire power supply system 2 has generated is monitored by the control apparatus 40. A signal that controls output of the generated power is output from the control apparatus 40 to the power generator equipment sets 21-25. A command signal 50 is also transmitted to the power storage equipment 30, and the supply of the power therefrom is controlled.

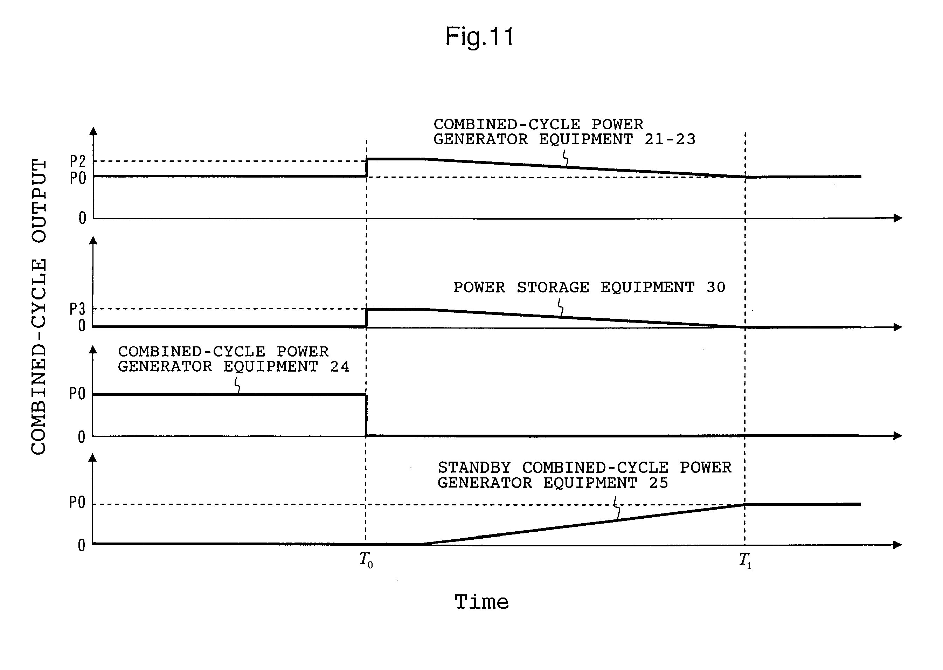

Fig. 11 shows a history of time-varying changes in electric power levels of each turbine power generator equipment set due to an operational stoppage of a normally active power generator equipment set according to the present embodiment of the present invention.
As shown in Fig. 11, if the operation of the power generator equipment 24 stops at time T0 for whatever reason such as trouble or disturbance, the power level 44 of the deactivated power generator equipment 24 decreases from the rated output level P0 to 0. The control apparatus 40, after detecting the decrease in the power level 44, starts the standby power generator equipment 25.

In addition, in the timing of starting the operation of the standby power generator equipment 25, the control apparatus 40 outputs command signals 51-53 to the normally active power generator equipment sets 21-23 to increase the power output levels thereof, and outputs a command signal 50 to the power storage equipment 30 to make the storage equipment 30 start supplying the power. This increases the output levels of the normally active power generator equipment sets 21-23 from the rated output P0 to a higher output level P2 (P0<P2<P1), thus increasing the output level of the power storage equipment 30 from 0 to P3 (P0<P3<P1).

After that, as power generation begins in the power generator equipment 25 and the power level 45 thereof increases, the control apparatus 40 gradually reduces the generated-power output levels of the normally active generator equipment sets 21-23 and the supply of power from the power storage equipment 30 so as to minimize changes in the generated-power output of the entire power supply system 2. At around the time when the rated output P0 of the standby power generator equipment 25 is reached, the control apparatus 40 returns the generated-power output levels of the normally active generator equipment sets 21-23 to the respective rated outputs P0 and zeroes the supply of power from the power storage equipment 30.

In the present embodiment, substantially the same advantageous effects as those of each foregoing embodiment can also be obtained since changes in the supply of power from the power supply system 2 during the time period from the operational start of the standby power generator equipment 25 to the arrival thereof at the rated output can be suppressed. In addition, since a decrease in the supply of power is compensated for by both an increase in the output level of each normally active power generator equipment set 21-23 and the supply of power from the power storage equipment 30, increases in the output levels of the power generator equipment sets 21-23 are suppressed in comparison with increase rates of power in the first to fifth embodiments, and loads upon the power generator equipment are correspondingly reduced.

### (Others)

The output-increasing elements shown in Figs. 2 and 4-7 may each be used alone or can be used in arbitrary combination. If there is a significant difference between the rated output P0 and the higher output level P1 obtained after the power output level has been increased, a further increase in P1 by combined use of the multiple output-increasing elements is anticipated, which allows the plant to respond more flexibly under the operationally stopped state described above.

In addition, while an example of using the combined-cycle power generator equipment sets 21-25 as power generator equipment is shown in each embodiment described above, a fossil-fuel combustion type of turbine power generator equipment, such as gas turbine power generator equipment or steam turbine power generator equipment, can be used instead, depending upon a particular electrical energy demand of the entire natural gas liquefaction plant. Furthermore, omission of the air compressor 61 in the gas turbine engine 60 may be possible, depending upon the fuel used or upon conditions.

While an example of providing four units as normally active power generator equipment in the power supply system 2 is shown, necessary functions of the natural liquefaction plant according to the present invention are achievable with a plurality of (at least two) normally active power generator units, and when two, three, or five units or more are provided as normally active power generator equipment, the present invention can also be applied. While an example of providing one unit as standby power generator equipment in the power supply system 2 is also shown, there can be a plurality of standby power generator units. Providing a plurality of standby power generator units allows the plant to respond flexibly, even if the plurality of normally active power generator units come to an operational stoppage.

While application of the present invention to a case in which the refrigerant compressors 13, 14, 15 in the natural gas liquefaction equipment 1 are of the motor-driven scheme is shown by way of example, the invention can be applied, even if the refrigerant compressors are of the turbine-driven scheme. In this case, the power supply system 2 is used to generate the electric power supplied to electrically powered devices equipped in or on the natural gas liquefaction equipment 1, as well as to the motors 131, 141, 151 for driving the refrigerant compressors, and if part of the normally active power generator equipment comes to an operational stoppage, the standby power generator equipment can be started, where necessary, by such equipment operation as described above.

## Claims

1. A natural gas liquefaction plant, comprising:
natural gas liquefaction equipment that liquefies a natural gas;
plural sets of normally active electric power generator equipment, each set of generator equipment including a power generator for generating electric power supplied to the natural gas liquefaction equipment, and a turbine for driving the power generator;
standby electric power generator equipment that includes a power generator for generating electric power supplied to the natural gas liquefaction equipment, and a turbine for driving the power generator; and
a control apparatus which, if either of the normally active power generator equipment sets comes to an operational stoppage, increases respective output levels of the normally active power generator equipment sets other than the power generator equipment set whose operation has stopped, and starts the standby power generator equipment.

2. A natural gas liquefaction plant, comprising:
a natural gas liquefaction apparatus that liquefies a natural gas by heat exchange with a refrigerant;
a refrigerant compressor that compresses the refrigerant supplied to the liquefaction apparatus;
a motor that drives the refrigerant compressor;
plural sets of normally active electric power generator equipment, each set of generator equipment including a power generator for generating electric power for driving the motor, and a turbine for driving the power generator;
standby electric power generator equipment that includes a power generator for generating electric power required to drive the motor, and a turbine for driving the power generator;
a detector that detects an operational status of the two kinds of power generator equipment; and
a control apparatus which, if the control apparatus detects an operational stoppage of either of the normally active power generator equipment sets by receiving a signal from the detector, the control apparatus also uses the detector signal to start the standby power generator equipment and simultaneously, until a rated output level of the standby power generator equipment has been reached, control respective output levels of the normally active generator equipment sets other than the generator equipment whose operation has stopped; wherein, based on the signal received from the detector, the control of each output level is conducted such that the output level will increase to compensate for an electric power shortage.

3. The natural gas liquefaction plant according to claim 2, wherein the detector is an electric-power measuring instrument that detects a generated-power output level of the power generator equipment.

4. The natural gas liquefaction plant according to claim 1, wherein:
the power generator equipment is combined-cycle power generator equipment that includes a combustor for combusting a fuel, a gas turbine for obtaining rotative power from combustion gases released from the combustor, an exhaust heat recovery boiler for generating a steam with exhaust air of the gas turbine as a heat source, a steam turbine for obtaining rotative power from the steam supplied from the exhaust heat recovery boiler, and a condenser for condensing exhaust steam supplied from the steam turbine.

5. The natural gas liquefaction plant according to claim 1, wherein:
the power generator equipment includes a combustor for combusting a fuel, a gas turbine for obtaining rotative power from combustion gases released from the combustor, and a fuel control mechanism for controlling a flow rate of the fuel supplied to the combustor; and
when the control apparatus increases the output levels of the normally active power generator equipment sets other than the power generator equipment set whose operation has stopped, the control apparatus controls the fuel control mechanism of the power generator equipment and increases the flow rate of the fuel supplied to the combustor.

6. The natural gas liquefaction plant according to claim 4, wherein:
the power generator equipment further includes an air compressor for compressing air and supplying the compressed air to the combustor, and a steam feeder for feeding a steam to an operating fluid present in a region from an exit of the air compressor to an entrance of the gas turbine; and
when the control apparatus increases the output levels of the normally active power generator equipment sets other than the power generator equipment set whose operation has stopped, the control apparatus controls the steam feeder of the power generator equipment and increases a flow rate of the steam fed to the operating fluid of the gas turbine.

7. The natural gas liquefaction plant according to claim 4, wherein:
the power generator equipment further includes an air compressor for compressing air and supplying the compressed air to the combustor, and an intake charge cooler for adjusting an entrance temperature of the air compressor; and
when the control apparatus increases the output levels of the normally active power generator equipment sets other than the power generator equipment set whose operation has stopped, the control apparatus controls the intake charge cooler of the power generator equipment and reduces the entrance temperature of the air compressor.

8. The natural gas liquefaction plant according to claim 4, wherein:
the power generator equipment further includes an air compressor for compressing air and supplying the compressed air to the combustor, and an atomizer for supplying a coolant in atomized form to intake air of the air compressor; and
when the control apparatus increases the output levels of the normally active power generator equipment sets other than the power generator equipment set whose operation has stopped, the control apparatus controls the atomizer of the power generator equipment and increases a supply rate of the atomized coolant with respect to the intake air of the air compressor.

9. The natural gas liquefaction plant according to claim 4, wherein:
the power generator equipment further includes an assist combustor for heating exhaust air of the gas turbine and increasing a heat source temperature of the exhaust heat recovery boiler; and
when the control apparatus increases the output levels of the normally active power generator equipment sets other than the power generator equipment set whose operation has stopped, the control apparatus controls the assist combustor of the power generator equipment and heats the exhaust air of the gas turbine.

10. The natural gas liquefaction plant according to claim 9, wherein:
gases that have occurred during a liquefying process for the natural gas are used as a fuel for the assist combustor.

11. The natural gas liquefaction plant according to claim 1, further comprising electric power storage equipment; wherein:
if either of the normally active power generator equipment sets comes to an operational stoppage, the control apparatus activates the electric power storage equipment to supply electric power, instead of increasing the output levels of the normally active power generator equipment sets other than the power generator equipment set whose operation has stopped.

12. The natural gas liquefaction plant according to claim 11, wherein:
the electric power storage equipment is flywheel energy storage equipment that converts part of the generated-power output of the normally active power generator equipment into rotational energy in advance and if an operational stoppage of either of the normally active power generator equipment sets occurs, reconverts the rotational energy into electric power.

13. The natural gas liquefaction plant according to claim 11, wherein:
the electric power storage equipment is an NaS battery that stores part of the generated-power output of the normally active power generator equipment.

14. The natural gas liquefaction plant according to claim 11, wherein:
the electric power storage equipment is a capacitor that stores part of the generated-power output of the normally active power generator equipment.

15. The natural gas liquefaction plant according to claim 1, further comprising electric power storage equipment;
wherein:
if either of the normally active power generator equipment sets comes to an operational stoppage, the control apparatus activates the electric power storage equipment to supply electric power, in addition to increasing the output levels of the normally active power generator equipment sets.

16. An electric power supply system of a natural gas liquefaction plant equipped with natural gas liquefaction equipment which liquefies a natural gas, the system comprising:
plural sets of normally active electric power generator equipment, each set of generator equipment including a power generator for generating electric power supplied to the natural gas liquefaction equipment, and a turbine for driving the power generator;
standby electric power generator equipment that includes a power generator for generating electric power supplied to the natural gas liquefaction equipment, and a turbine for driving the power generator; and
a control apparatus which, if either of the normally active power generator equipment sets comes to an operational stoppage, increases respective output levels of the normally active power generator equipment sets other than the power generator equipment set whose operation has stopped, and starts the standby power generator equipment.

17. The electric power supply system according to claim 16, further comprising electric power storage equipment;
wherein:
if either of the normally active power generator equipment sets comes to an operational stoppage, the control apparatus activates the electric power storage equipment to supply electric power, instead of increasing the output levels of the normally active power generator equipment sets other than the power generator equipment set whose operation has stopped.

18. The electric power supply system according to claim 16, further comprising electric power storage equipment;
wherein:
if either of the normally active power generator equipment sets comes to an operational stoppage, the control apparatus activates the electric power storage equipment to supply electric power, in addition to increasing the output levels of the normally active power generator equipment sets other than the power generator equipment set whose operation has stopped.

19. A control apparatus of a natural gas liquefaction plant equipped with natural gas liquefaction equipment which liquefies a natural gas, and with plural sets of normally active electric power generator equipment, each set of generator equipment including a power generator for generating electric power supplied to the natural gas liquefaction equipment, and a turbine for driving the power generator;
wherein:
the natural gas liquefaction plant further has standby electric power generator equipment that includes a power generator for generating electric power supplied to the natural gas liquefaction equipment, and a turbine for driving the power generator; and
if either of the normally active power generator equipment sets comes to an operational stoppage, the control apparatus increases respective output levels of the normally active power generator equipment sets other than the power generator equipment set whose operation has stopped, and starts the standby power generator equipment.

20. The control apparatus according to claim 19, wherein if either of the normally active power generator equipment sets comes to an operational stoppage, the control apparatus activates electric power storage equipment to supply electric power, instead of increasing the output levels of the normally active power generator equipment sets other than the power generator equipment set whose operation has stopped.

21. The control apparatus according to claim 19, wherein if either of the normally active power generator equipment sets comes to an operational stoppage, the control apparatus activates electric power storage equipment to supply electric power, in addition to increasing the output levels of the normally active power generator equipment sets other than the power generator equipment set whose operation has stopped.

22. An operating method for a natural gas liquefaction plant equipped with natural gas liquefaction equipment which liquefies a natural gas, with plural sets of normally active electric power generator equipment, each set of generator equipment including a power generator for generating electric power supplied to the natural gas liquefaction equipment, and a turbine for driving the power generator, and with standby electric power generator equipment which includes a power generator for generating electric power supplied to the natural gas liquefaction equipment, and a turbine for driving the power generator, the operating method comprising:
if either of the normally active power generator equipment sets comes to an operational stoppage, increasing respective output levels of the normally active power generator equipment sets other than the power generator equipment set whose operation has stopped, and starting the standby power generator equipment.

23. The operating method according to claim 22, further comprising:
if either of the normally active power generator equipment sets comes to an operational stoppage, activating electric power storage equipment to supply electric power, instead of increasing the output levels of the normally active power generator equipment sets other than the power generator equipment set whose operation has stopped.

24. The operating method according to claim 22, further comprising:
if either of the normally active power generator equipment sets comes to an operational stoppage, activating electric power storage equipment to supply electric power, in addition to increasing the output levels of the normally active power generator equipment sets other than the power generator equipment set whose operation has stopped.
